# EUROPÄISCHE PATENTSCHRIFT

(11) **EP 4 047 389 B1**
(45) Veröffentlichungstag und Bekanntmachung des Hinweises auf die Patenterteilung: **29.03.2023**
(21) Anmeldenummer: 21157831.5
(22) Anmeldetag: 18.02.2021
(51) Int. Cl.: G01S 7/497, G01S 17/894, G01S 17/36

(54) **ERFASSUNG DREIDIMENSIONALER BILDDATEN**
THREE-DIMENSIONAL IMAGE DATA ACQUISITION
ENREGISTREMENT DE DONNÉES D'IMAGE TRIDIMENSIONNELLES

(43) Veröffentlichungstag der Anmeldung: 24.08.2022
(73) Patentinhaber: SICK AG, 79183 Waldkirch (DE)
(72) Erfinder: Hammes, Dr. Markus, 79117 Freiburg (DE); Sigmund, Jörg, 79341 Kenzingen (DE); Strepp, Wolfram, 79106 Freiburg (DE)

(56) Entgegenhaltungen:
- DE-A1-102010 041 390
- DE-A1-102013 207 653
- DE-B3-102007 008 806

## Beschreibung

Die Erfindung betrifft eine Kamera, insbesondere eine 3D-Lichtlaufzeitkamera, und ein Verfahren zur Erfassung dreidimensionaler Bilddaten aus einem Erfassungsbereich nach dem Oberbegriff von Anspruch 1 beziehungsweise 15.

Eine derartige Kamera misst einen Abstand und gewinnt dadurch eine Tiefeninformation. Die erfassten dreidimensionalen Bilddaten mit Abstands- oder Entfernungswerten für die einzelnen Pixel werden auch als 3D-Bild, Entfernungsbild oder Tiefenkarte bezeichnet. Zur Ermittlung der Tiefeninformationen sind verschiedene Verfahren bekannt. Davon soll hier eine auf einem Phasenverfahren basierende Lichtlaufzeitmessung (TOF, Time of Flight oder Lidar, Light Detection and Ranging) näher betrachtet werden.

Dabei wird eine Szene mit amplitudenmoduliertem Licht ausgeleuchtet. Das aus der Szene zurückkehrende Licht wird empfangen und mit der gleichen Frequenz demoduliert, die auch für die Modulation des Sendelichts verwendet wird (Lock-In-Verfahren). Aus der Demodulation resultiert ein Amplitudenmesswert, der einem Abtastwert des Empfangssignals entspricht. Für die Phasenbestimmung eines periodischen Signals sind nach dem Nyquist-Kriterium mindestens zwei Abtastwerte notwendig. Deshalb wird die Messung mit unterschiedlichen relativen Phasenlagen zwischen den Signalen für die sendeseitige Modulation und die empfangsseitige Demodulation durchgeführt. Damit lässt sich dann die laufzeitbedingte absolute Phasenverschiebung zwischen Sende- und Empfangssignal ermitteln, die wiederum proportional zum Objektabstand in der Szene ist.

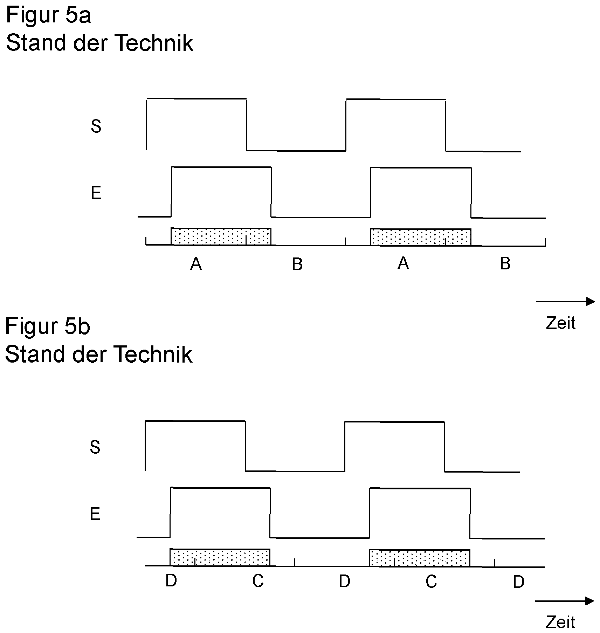

Figur 5a zeigt ein herkömmliches Modulationsschema. Oben ist mit S das Sendelicht dargestellt, das mit der Modulationsfrequenz periodisch moduliert wird. Das zurückkehrende Empfangslicht darunter ist mit E bezeichnet und weist je nach Abstand des Objekts, an dem das Sendelicht zurückgeworfen wurde, einen Phasenversatz zum Sendelicht S auf. Unten sind Zeitabschnitte gezeigt, die Ladungsspeichern des jeweiligen Pixels der Kamera zugewiesen sind, in denen die innerhalb des jeweiligen Zeitabschnitts erzeugten Photoelektronen gespeichert werden. Die Zeitabschnitte müssen nicht wie gezeigt bündig mit dem Sendelicht gewählt sein, aber ein etwaiger Zeitversatz sollte berücksichtigt werden, da sich sonst ein Messfehler der Phase und damit des Abstands ergibt.

In Figur 5a gibt es zwei Ladungsspeicher A und B an jedem Pixel, zwischen denen mit der Modulationsfrequenz des Sendelichts hin- und her geschaltet wird. Es wird über eine Vielzahl von Modulationsperioden hinweg integriert, d.h. die auflaufenden Ladungsträger werden aufsummiert, und erst dann wird die Gesamtladung aus den Pixeln ausgelesen, wobei Figur 5a zwei solche Modulationsperioden zeigt. Die gesuchte Phase ergibt sich aus B/(A+B).

Ein Nachteil dieser einfachen Messung ist die Empfindlichkeit gegenüber Fremd- oder Hintergrundlicht. Zwar ist die Mindestanzahl für die Phasenbestimmung eines periodischen Signals, wie oben gesagt, mit den zwei Werten A und B gerade so erreicht. Für die zusätzliche Berücksichtigung der weiteren Variable Hintergrundlicht, die bei Annahme eines konstanten Pegels eine Konstante ist, fehlt aber mindestens ein weiterer Abtastwert. Um auch Hintergrundlicht zu berücksichtigen, und aus weiteren Gründen wie dem Ausgleich von Nichtlinearitäten und Unsymmetrien in den Pixeln des Bildsensors, die relativ hohe unbekannte systematische Messabweichungen verursachen, können zusätzliche Messungen durchgeführt werden. Es sind deshalb für eine robuste und genaue Abstandsmessung mehr als zwei Einzelmessungen erforderlich, um einen Tiefenwert pro Pixel zu erhalten, oder anders ausgedrückt ist es von Vorteil, wenn ein Frame der 3D-Bildaufnahme aus mehr als zwei Teilmessungen besteht. Zur Bestimmung des Hintergrundlichts gibt es alternativ die Möglichkeit, die Anzahl der Ladungsspeicher der Pixel zu erhöhen, wobei allerdings damit ohne wiederholte Einzelmessungen kein Ausgleich von Asymmetrien in den Pixeln erreicht ist. Umgekehrt können die Pixel auch nur einen einzigen Ladungsspeicher aufweisen, und zum Ausgleich kann die Anzahl Teilmessungen entsprechend erhöht werden.

Ein erweitertes Modulationsschema für vier Abtastwerte ist gemeinsam in den Figuren 5a und 5b dargestellt. Mit der Messung gemäß Figur 5a werden die Werte A und B bestimmt. Es folgt eine weitere Messung gemäß Figur 5b, in dem die Zeitabschnitte, nach denen jeweils zwischen den beiden Ladungsspeichern hin- und hergeschaltet wird, um 1/4 der Periode der Modulationsfrequenz verschoben ist. Um die so gewonnenen Messwerte zu unterscheiden, sind sie mit C und D bezeichnet. Die gesuchte Phase ergibt sich nun aus arctan((C-D)/(A-B)). Wie schon erwähnt, kann die Anzahl Ladungsspeicher in den Pixeln in gewisser Hinsicht gegen eine Anzahl von Teilmessungen je Frame getauscht werden, wobei vergleichbare Messungen über ein konstantes Produkt aus Anzahl Ladungsspeicher und Anzahl Teilmessungen verknüpft sind, denn dieses Produkt ergibt die Zahl der in einem Frame gewonnenen Abtastwerte, aus denen die Modulationsfrequenz rekonstruiert wird.

Eine einführende Diskussion der beiden anhand Figur 5a und 5b vorgestellten Verfahren findet sich beispielsweise in der Arbeit von Li, Larry, "Time-of-flight camera - an introduction", Technical white paper SLOA190B (2014).

Neben den skizzierten Messungen mit zwei oder vier Abtastwerten sind auch Varianten mit drei Abtastwerten bei 0°, 120° und 240° bekannt. In einer alternativen Bildsensorarchitektur sind die Messwerte der beiden Ladungsspeicher A und B nicht einzeln auslesbar, sondern es handelt sich um differentielle Pixel, die einen Wert A-B ausgeben. Weiterhin ist bekannt, die Abtastwerte wie beispielsweise A, B, C und D ein weiteres Mal bei 180° Phasenversatz zu messen, um Asymmetrien in den Pixeln zu kompensieren. Die jeweilige Anzahl von Abtastwerten bringt verschiedene Vor- und Nachteile mit sich, die für unterschiedliche Anwendungen sinnvoll sein können. Je mehr Abtastwerte gewonnen werden, desto höher wird die Messgenauigkeit beziehungsweise desto geringer werden die Tiefenmessabweichungen. Mit weniger Abtastwerten werden die Messfehler größer, dafür sinkt die Aufnahmezeit, und es entstehen weniger Bewegungsartefakte.

Ein weiterer Aspekt der Lichtlaufzeitmessung mit einem Phasenverfahren ist der begrenzte Eindeutigkeitsbereich, denn die Phasenverschiebung ist nur bis zur Periode der Modulationsfrequenz eindeutig. Um den Eindeutigkeitsbereich und damit die Reichweite der Kamera zu erweitern, wird häufig aufeinanderfolgend mit mehreren verschiedenen Modulationsfrequenzen gemessen. Ein alternatives Absenken der Modulationsfrequenz kommt nur in engen Grenzen in Betracht, weil dadurch die Messgenauigkeit beeinträchtigt wird. Die Messung mit mehreren Modulationsfrequenzen kombiniert eine hohe Tiefenauflösung mit einem großen Tiefenmessbereich. Diese Reichweitenerhöhung ist für jede Anzahl Teilmessungen möglich.

Die zusätzliche Entfernungsdimension lässt sich in einer Vielzahl von Anwendungen nutzen, um mehr Informationen über Objekte in der von der Kamera erfassten Szenerie zu gewinnen und so verschiedene Aufgaben zu lösen. In der Automatisierungstechnik beispielsweise können anhand dreidimensionaler Bildinformationen Objekte erfasst und klassifiziert werden, um weitere automatische Bearbeitungsschritte davon abhängig zu machen, welche Objekte vorzugsweise einschließlich ihrer Position und Orientierung erkannt wurden. Damit kann beispielsweise die Steuerung von Robotern oder verschiedenartigen Aktoren an einem Förderband unterstützt werden.

Bei Fahrzeugen, die auf öffentlichen Straßen oder in abgeschlossener Umgebung speziell im Bereich der Fabrik- und Logistikautomatik verkehren, soll mit einer 3D-Kamera die gesamte Umgebung und insbesondere ein geplanter Fahrweg möglichst vollständig und dreidimensional erfasst werden. Das betrifft praktisch alle denkbaren Fahrzeuge, seien es solche mit Fahrer wie PKW, LKW, Arbeitsmaschinen und Gabelstapler oder führerlose Fahrzeuge wie AGVs (Automated Guided Vehicle), AGCs (Automated Guided Cart), AMRs (Autonomous Mobile Robot) oder Flurförderzeuge. Die Bilddaten werden genutzt, um die autonome Navigation zu ermöglichen oder einen Fahrer zu unterstützen, unter anderem um Hindernisse zu erkennen, Kollisionen zu vermeiden oder das Be- und Entladen von Transportgütern einschließlich Kartons, Paletten, Containern oder Anhängern zu erleichtern.

In der Sicherheitstechnik erfasst die 3D-Kamera Personen in der Umgebung einer Gefahrenstelle, beispielsweise einer Maschine oder speziell eines Roboters. Bei Erkennung eines unzulässigen Eingriffs in ein Schutzvolumen oder Unterschreiten eines Sicherheitsabstands zu der Maschine erfolgt eine sicherheitsgerichtete Reaktion, um einen Unfall zu vermeiden. In der Sicherheitstechnik eingesetzte Sensoren müssen besonders zuverlässig arbeiten und deshalb hohe Sicherheitsanforderungen erfüllen, beispielsweise die Norm EN 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. Die Sicherheitsnormen spezifizieren weiterhin sogenannten Sicherheitsniveaus oder Sicherheitsanforderungsstufen, mit denen die erreichbare Sicherheit abgestuft wird. Beispiele dafür sind SIL nach IEC61508/IEC61511 (Safety Integrity Level) mit 1 als niedrigste und 4 als höchster Stufe oder PL (Performance Level) nach EN ISO 13849-1 mit a "niedrig" bis e "hoch".

Anwendungen der Sicherheitstechnik im industriellen Umfeld werden allerdings bisher in der Praxis noch mit sicheren Lichtgittern oder Laserscannern gelöst. Zunehmende Automatisierungsgrade würden an sich die Absicherung immer komplexerer Automatisierungsaufgaben und Geometrien erfordern, die mit diesen vergleichsweise einfachen, herkömmlichen Sicherheitssensoren nur bedingt realisierbar sind. Tatsächlich sind aber sichere Kameras oder gar 3D-Kameras im Markt noch so gut wie nicht verfügbar, oder sie haben erhebliche Einschränkungen durch Reichweite, Baugröße, Kosten und dergleichen Faktoren. Stattdessen basieren 3D-Lichtlaufzeitkameras auf einem für ganz andere Anwendungen entwickelten hochintegrierten Bildsensor, in dem sowohl das Modulationssignal für die Beleuchtung wie auch die Demodulationssignale und ein großer Teil der Messtechnik integriert sind. Diese Bildsensoren sind folglich nicht mit dem Blick auf Sicherheitsanwendungen spezifiziert, und die fehlende Sicherheitsfunktionalität beziehungsweise die fehlenden sicherheitstechnischen Diagnosemöglichkeiten ließen sich auch nur rein theoretisch mit dem ungeheuren und für die Stückzahlen der Sicherheitstechnik schlicht prohibitiven Aufwand einer neuen Chipentwicklung ergänzen.

Zu der sicheren Auslegung eines herkömmlichen Sicherheitslaserscanners ist ein internes Referenzziel vorgesehen, das mit jedem Umlauf des Laserscanners abgetastet und zu dem die erwartete Entfernung gemessen werden muss. Damit ist verlässlich die gesamte Messkette mit derselben Ansprechzeit getestet, mit der auch neue Scannerdaten geliefert werden. Dies ist erstmals in der DE 43 40 756 A1 beschrieben und bis heute üblich. Das bewährte Prinzip ist wegen deren fehlender Scanbewegung so nicht auf eine Kamera übertragbar.

Prinzipiell ist es denkbar, einzelne Komponenten des Bildsensors durch verschiedene Stimuli oder Testmuster stückweise zu prüfen. Aus der Funktionsfähigkeit der Einzelkomponenten wird dann auf die Funktionsfähigkeit der gesamten Messkette geschlossen. Tatsächlich haben aber die Testmuster die Messkette nie vollständig durchlaufen. Der Schluss auf die gesamte Messwerte ist daher überhaupt nur mit einem sehr guten Verständnis der Teilbereiche des Bildsensors denkbar und deshalb spezifisch auf einen bestimmten Bildsensor zugeschnitten. Ein Bildsensorwechsel verursacht somit immensen Aufwand, weil die Sicherheit ganz neu gewährleistet werden muss. Trotzdem reicht der Diagnosegrad für ein hohes Sicherheitsniveau im Sinne der oben genannten Sicherheitsnormen nicht aus, es ist bestenfalls ein mittleres Sicherheitsniveau erreichbar. Ein Grund dafür ist, dass die mehreren Tests von Teilfunktionen durch unterschiedliche Stimuli einer recht großen Ausführungszeit bedürfen. Das zeigt nicht nur den Aufwand dieser Testverfahren auch im Hinblick auf Rechenressourcen und Laufzeit. Wenn das Sicherheitsniveau eine Fehleraufdeckung innerhalb der Ansprechzeit fordert, ist das einfach zu langsam.

Die noch unveröffentlichte deutsche Patentanmeldung mit dem Aktenzeichen 102019131988.9 befasst sich mit einer 3D-Lichtlaufzeitkamera, in der die Anzahl der Messwiederholungen oder Teilmessungen angepasst werden kann. Das erhöht die Flexibilität und Einsatzmöglichkeiten, löst aber das Sicherheitsproblem nicht.

Aus der EP 3 525 004 B1 ist ein TOF-Sensor mit Prüfsender bekannt. Im Betrieb des Sensors wird der Sender etwa alle 100 Millisekunden unterbrochen. In der Pause wird ein Prüfsignal gesendet und die dabei gemessene virtuelle Entfernung mit einem Erwartungswert verglichen. Dieser Testzyklus ist für ein hohes Sicherheitsniveau zu lang. Würde man den Sender öfter unterbrechen, so würde dies die Framerate und damit die Ansprechzeit beeinträchtigen, da bei hinreichend kurzen Testzyklen ähnlich viel Zeit für die eigentliche Messung wie für das Prüfsignal gebraucht würde.

Die DE 10 2010 038 566 A1 offenbart eine weitere Lichtlaufzeitkamera mit Funktionsüberwachung. Dafür ist ein Referenzkanal mit einer Referenzlichtquelle vorgesehen. Die Referenzmessung erfolgt in vorgegebenen Zeitabständen, beispielsweise nach jeder Distanzmessung oder in größeren Zeitabständen. In diesen Alternativen manifestieren sich die im Vorabsatz genannten Nachteile erneut, denn bei einer Referenzmessung nach jeder Distanzmessung leidet die Framerate, während seltenere Referenzmessungen keine für ein hohes Sicherheitsniveau erforderliche kurze Ansprechzeit erreichen.

In der EP 3 091 271 A1 wird ein Lichttaster auf SPAD-Basis vorgestellt (Single-Photon Avalanche Diode), der in einer Ausführungsform einen weiteren Lichtsender als Referenzlichtsender zur sicherheitsgerichteten Selbsttestung aufweist. Hier wird bevorzugt ein Pulsverfahren genutzt und ein cw-Verfahren ohne tiefere Erläuterungen nur erwähnt. Ein weiteres Mal ist unklar, zu welchen Zeiten eine Selbsttestung stattfinden könnte, ohne sich entweder nachteilig auf die Framerate oder die Länge der Testzyklen auszuwirken.

Die DE 10 2007 008 806 B3 beschreibt eine optoelektronische Überwachung mit Test durch Dynamisierung. Dabei wird in einem externen Test das Empfangslicht aus der Szenerie mit Testlicht überlagert. Für einen internen Test ist eine Zusatzbeleuchtung vorgesehen, die moduliertes Licht einer vorgegebenen Phase in das Empfangselement einstrahlt. Erneut finden sich keine Ausführungen zu der Frage, wie die erforderliche Zeit für diesen Test aufgebracht werden kann, ohne entweder die Framerate zu beeinträchtigen oder die Testzyklen in einer für hohes Sicherheitsniveau unverträglichen Weise zu verlängern.

Die DE 10 2010 041 390 A1 beschreibt ein Lichtlaufzeitkamerasystem, mit einem Photosensor, der mindestens ein Empfangspixel aufweist, und vorzugsweise als Photomischdetektor ausgebildet ist, mit einer Beleuchtungslichtquelle, und mit einem Modulator, der mit dem Photosensor und der Beleuchtungslichtquelle verbunden ist, wobei im Bereich der Beleuchtungslichtquelle ein Kontrollsensor derart angeordnet ist, dass von dem Kontrollsensor zumindest ein Teil einer von der Beleuchtungslichtquelle emittierten Strahlung empfangbar ist und mit mindestens einer Referenzlichtquelle, die derart angeordnet ist, dass eine von der Referenzlichtquelle emittierte Strahlung einen Referenzphotosensor und/oder den Photosensor beleuchtet..

Es ist daher Aufgabe der Erfindung, die Sicherheit einer gattungsgemäßen Kamera zu verbessern.

Diese Aufgabe wird durch eine Kamera, insbesondere eine 3D-Lichtlaufzeitkamera, und ein Verfahren zur Erfassung dreidimensionaler Bilddaten aus einem Erfassungsbereich nach Anspruch 1 beziehungsweise 15 gelöst. Die Kamera funktioniert im Kern so, wie dies einleitend beschrieben wurde. Eine Beleuchtungseinheit erzeugt Sendelicht, das mit einer ersten Modulationsfrequenz moduliert wird. Es sei vorsichtshalber gesagt, dass dies eine künstliche Amplitudenmodulation mit einer gewählten Modulationsfrequenz ist, die nicht mit der Trägerfrequenz der eigentlichen Lichtwelle verwechselt werden sollte. Das von Objekten im Erfassungsbereich zurückgeworfene Sendelicht fällt überlagert mit Fremd- oder Hintergrundlicht auf einen Bildsensor mit einer Vielzahl von Empfangselementen oder Pixeln, die daraus ein jeweiliges Empfangssignal erzeugen.

Eine Vielzahl von Demodulationseinheiten gewinnt in einem Lock-In-Verfahren durch Demodulation mit einem Signal der ersten Modulationsfrequenz aus dem jeweiligen Empfangssignal einen Abtastwert. Für eine Abstandsmessung wird eine erste Anzahl von mindestens zwei Teilmessungen mit unterschiedlicher Phase zwischen den Signalen mit der Modulationsfrequenz für das Sendelicht und für die Demodulation durchgeführt. Teilmessungen können sequentielle Messwiederholungen durch erneute Belichtung und/oder parallele Messungen in mehreren Ladungsspeichern der Empfangselemente sein. Aus den mehreren Abtastwerten wird die Phasenlage des Empfangssignals rekonstruiert, um daraus die Lichtlaufzeit und letztlich den Abstand zu erhalten. Eine Abstandsmessung gewinnt folglich mit mehreren Teilmessungen entsprechend der ersten Anzahl einen Abstandswert je beteiligtem Empfangselement oder Pixel und bildet somit einen Frame der Bildaufnahme.

Eine Referenzbeleuchtungseinheit sendet Referenzlicht aus, das ebenfalls mit der ersten Modulationsfrequenz moduliert ist und den Bildsensor belichtet. Das Referenzlicht wird im Gegensatz zum Sendelicht intern, also innerhalb der Kamera und insbesondere eines Gehäuses der Kamera, auf den Bildsensor zurückgeführt. Es tritt demnach nicht aus der Kamera in den Erfassungsbereich. Auf diese Weise wird ein Referenzkanal gebildet, in dem aktiv zumindest ein Teil der Empfangselemente, vorzugsweise alle Empfangselemente oder jedenfalls die einem sicherheitsrelevanten Bereich im Erfassungsbereich entsprechenden Empfangselemente durch Beleuchten getestet werden können.

Für diesen Funktionstest wird analog zu einer Abstandsmessung eine zweite Vielzahl von Referenzteilmessungen durchgeführt. Das sind Teilmessungen, in denen aber nun die Referenzbeleuchtungseinheit die Rolle der Beleuchtungseinheit einnimmt. Aus den Referenzteilmessungen wird ein Referenzabstandswert bestimmt, der ohne weitere Modifikationen einer Länge des Lichtwegs zwischen Referenzbeleuchtungseinheit und Bildsensor entspricht. Die Referenzbeleuchtungseinheit kann andere Referenzabstände vortäuschen oder emulieren. Jedenfalls sollte eine intakte Kamera für einen erfolgreichen Funktionstest die erwarteten Referenzabstände messen.

Abstandsmessung und Funktionstest werden von einer Steuer- und Auswertungseinheit gesteuert und ausgewertet. Dabei sind die Demodulationseinheiten vorzugsweise bereits in den Pixeln implementiert, die dann auch als ToF-Pixel (ToF, Time of Flight, Lichtlaufzeit) oder Lock-in-Pixel bezeichnet werden. Weitere Teile der Steuer- und Auswertungseinheit, insbesondere diejenigen, die für die Teilmessungen und Referenzteilmessungen und/oder die Rekonstruktion der Phase aus mehreren Abtastwerten zuständig sind, können bereits in den Pixeln oder auf dem Bildsensor implementiert beziehungsweise mit dem Bildsensor auf einem gemeinsamen Chip integriert sein. Eine alternative, dem Bildsensor nachgelagerte Bestimmung der Entfernung aus mehreren Abtastwerten ist auch möglich, beispielsweise in einem FPGA (Field-Programmable Gate Array).

Die Erfindung geht von dem Grundgedanken aus, die Referenzteilmessungen, die für einen Funktionstest benötigt werden, auf mehrere Abstandsmessungen oder Frames zu verteilen. Die Durchführung der zweiten Anzahl Referenzteilmessungen erstreckt sich somit über mehrere Abstandsmessungen oder Frames. Mit anderen Worten werden die Referenzteilmessungen über die Teilmessungen verteilt oder in die Teilmessungen eingestreut und seltener durchgeführt, und nochmals anders ausgedrückt werden bereits wieder Teilmessungen für den nächsten Abstandswert beziehungsweise Frame durchgeführt, ohne dass innerhalb des aktuellen Frames die zweite Anzahl Referenzteilmessungen erreicht ist. Es sei hier schon bemerkt und wird später näher erläutert, dass durch Rückgriff auf ältere Referenzteilmessungen dennoch Funktionstests in einer hohen Wiederholrate bis hin zur Framerate selbst möglich bleiben. Innerhalb eines Frames wird dann trotzdem die zweite Anzahl Referenzteilmessungen nicht erreicht.

Die Erfindung hat den Vorteil, dass ein vollständig in die Kamera integrierbarer Referenzkanal bereitgestellt ist, mit dem die gesamte Messkette der dreidimensionalen Bilddatenerfassung zur Laufzeit getestet werden kann. Für den Funktionstest kann der bereits vorhandene Rechenpfad der Entfernungsberechnung genutzt werden. Das vereinfacht nicht nur die Implementierung, sondern testet die Entfernungsberechnung implizit gleich mit. Durch die Verteilung der Referenzteilmessungen auf mehrere Abstandsmessungen oder Frames bleibt die eigentliche Aufnahmezeit der Kamera weitgehend unbeeinträchtigt. Zugleich sind Funktionstests innerhalb der Ansprechzeit möglich. Je nach Verteilung der Teilmessungen und Referenzteilmessungen ergeben sich unterschiedliche Auswirkungen auf den Leistungsverbrauch und damit die thermische Belastung des Geräts. Insgesamt kann die Kamera damit sicher im Sinne der einleitend genannten oder vergleichbarer Sicherheitsnormen für den Personenschutz, die Maschinensicherheit beziehungsweise berührungslos wirkende Schutzeinrichtungen ausgelegt werden, und dies bis zu einem hohen Sicherheitsniveau beispielsweise mindestens SIL 2 oder PL d. Damit ist eine flexible Anwendung in einem breiten Anwendungsfeld erschlossen, insbesondere in mobilen Anwendungen, in denen durch die Bewegung keine verlässliche Erwartungshaltung an Teile des Bildes gestellt werden kann.

Die Steuer- und Auswertungseinheit ist bevorzugt dafür ausgebildet, während einer Teilmessung nur die Beleuchtungseinheit und während einer Referenzteilmessung nur die Referenzbeleuchtungseinheit zu aktivieren. Damit stören die beiden Beleuchtungen einander nicht, es findet exklusiv entweder eine Teilmessung oder eine Referenzteilmessung statt. Die jeweilige Beleuchtung ist keineswegs zwingend über das gesamte jeweilige Zeitfenster aktiv, es gibt im Gegenteil vorzugsweise möglichst viele Phasen ganz ohne Beleuchtung.

Die erste Anzahl und/oder die zweite Anzahl beträgt vorzugsweise mindestens drei. Somit kann die jeweilige Phase aus mindestens drei Abtastwerten der mindestens drei Teilmessungen beziehungsweise mindestens drei Referenzteilmessungen rekonstruiert werden. Wie einleitend diskutiert, würden grundsätzlich schon zwei Abtastwerte genügen, aber dann würde bereits konstantes Hintergrundlicht den Abstandswert bis zur Unkenntlichkeit verzerren, und zumindest dieser Offsetbeitrag des Hintergrundlichts kann durch einen dritten Abtastwert berücksichtigt werden. Allgemein wird die durch Laufzeiten verursachte Phase durch zusätzliche Abtastwerte genauer rekonstruiert und damit die Abstandsmessung verfeinert. Eine bevorzugte Konstellation für drei Abtastwerte wird durch einen Phasenversatz zwischen sendeseitiger Modulation und empfangsseitiger Demodulation von 0°, 120° und 240° erreicht, bei vier Abtastwerten beträgt der Phasenversatz bevorzugt 0°, 90°, 180° und 270°. Mehr Abtastwerte und andere Phasenlagen sind möglich, ebenso wie eine zusätzliche Teilmessung oder Referenzteilmessung für ein Offset beziehungsweise das Hintergrundlicht.

Die erste Anzahl ist bevorzugt ungleich der zweiten Anzahl. Das bedeutet letztlich unterschiedliche Genauigkeiten bei der Abstandsmessung und beim Funktionstest. Vorzugsweise ist die erste Anzahl größer als die zweite Anzahl und damit die Abstandsmessung durch mehr Teilmessungen verlässlicher und präziser. Im Erfassungsbereich ist wesentlich mehr Variabilität durch unterschiedliche Abstände, Umgebungslicht und dergleichen zu erwarten. Im Referenzkanal kommt es zudem nicht auf Messpräzision für den ohnehin festliegenden Abstand zwischen Referenzbeleuchtungseinheit und Bildsensor an, sondern allein darauf, Fehler aufzudecken. Alternativ ist die erste Anzahl gleich der zweiten Anzahl, um für noch ähnlichere Verhältnisse während einer Abstandsmessung und eines Funktionstests zu sorgen.

Die Steuer- und Auswertungseinheit ist bevorzugt dafür ausgebildet, je Abstandsmessung eine Referenzteilmessung oder zwei Referenzteilmessungen durchzuführen. Auf die erste Anzahl Teilmessungen einer Abstandsmessung kommt besonders bevorzugt lediglich genau eine Referenzteilmessung. Dadurch wird die Dauer einer Abstandsmessung und damit die Framerate so wenig wie möglich beeinträchtigt. Für den Funktionstest sind mehrere Referenzteilmessungen erforderlich, das ist demnach erst nach mehreren Abstandsmessungen oder Frames möglich. Um dies zu beschleunigen, oder im Falle des noch zu beschreibenden bevorzugten Rückgriffs auf ältere Referenzteilmessungen möglichst aktuell zu bleiben, können auch zwei Referenzteilmessungen je Abstandsmessung erfolgen. Unter den im Vergleich zur Abstandsmessung kontrollierten Bedingungen des Funktionstests mit nur internen Laufwegen im schützenden Gehäuse der Kamera wäre eine Bestimmung des Referenzabstandswerts aus zwei Referenzteilmessungen immerhin vorstellbar. Es ist aber erfindungsgemäß nicht vorgesehen, mit den Referenzteilmessungen einer einzigen Abstandsmessung einen Referenzabstandswert zu bestimmen, und für eine ausreichende Verlässlichkeit sollte der Funktionstest vorzugsweise, wie schon ausgeführt, auf mindestens drei Referenzteilmessungen beruhen.

Die Steuer- und Auswertungseinheit ist bevorzugt dafür ausgebildet, in jeder i-ten Abstandsmessung mindestens eine Referenzteilmessung durchzuführen. Besonders bevorzugt wird in jeder i-ten Abstandsmessung genau eine Referenzteilmessung oder werden genau zwei Referenzteilmessungen durchgeführt Mit i ist ein Zyklus der Referenzteilmessungen angegeben. Der Fall i=1 ist vorzugsweise zugelassen, womit in jeder Abstandsmessung mindestens eine Referenzteilmessung erfolgt. Für i>1 ergeben sich langsamere Zyklen mit Abstandsmessungen dazwischen, in denen es gar keine Referenzteilmessung gibt. Statt der Zyklen sind auch unregelmäßige Verteilungen denkbar, beispielsweise in einem ersten Frame eine Referenzteilmessung, in einem zweiten Frame zwei Referenzteilmessungen, in einem dritten Frame keine Referenzteilmessung und in weiteren Frames die gleiche, eine ähnliche oder eine völlig andere Verteilung.

Die Steuer- und Auswertungseinheit ist bevorzugt dafür ausgebildet, die erste Anzahl, die zweite Anzahl, den Phasenversatz der Teilmessungen, den Phasenversatz der Referenzteilmessungen und/oder die Verteilung von Referenzteilmessungen auf Abstandsmessungen zu variieren. Die Kamera ist also nicht auf eine Konfiguration festgelegt, sondern dies kann situativ auf kleinen Zeitskalen oder dauerhaft für eine längere folgende Betriebsphase umgestellt werden. Damit ist insbesondere eine Anpassung an ein anderes Sicherheitsniveau erreichbar. Ein Beispiel von unzähligen denkbaren ist eine Umstellung von drei Teilmessungen bei 0°, 120°, 240° auf fünf Teilmessungen bei 45°, 90°, 120°, 270° und 350°, wobei dies in gleicher oder ganz anderer Weise für die Referenzteilmessungen ebenfalls erfolgt oder nicht. Ein anderes Beispiel ist eine Umstellung von je einer Referenzteilmessung je Abstandsmessung auf nun zwei Referenzteilmessungen in jeder dritten Abstandsmessung. So lassen sich Ansprechzeit und Genauigkeit der Abstandsmessung, Verlässlichkeit des Funktionstests, Zykluszeiten und letztlich auch ein Sicherheitsniveau adaptieren. Insbesondere kann eine derartige Veränderung den Funktionstest diversifizieren.

Die Steuer- und Auswertungseinheit ist bevorzugt dafür ausgebildet, einen Referenzabstandswert aus mindestens einer aktuellen Referenzteilmessung, einer aktuellen Abstandsmessung und mindestens einer früheren Referenzteilmessung einer früheren Abstandsmessung, insbesondere auf diese Weise mit jeder Abstandsmessung einen Referenzabstandswert zu bestimmen. Das ist der schon mehrfach angedeutete Rückgriff auf ältere Referenzteilmessungen durch eine Art rollierendes Verfahren ähnlich einem gleitenden Mittelwert. Da innerhalb einer einzigen Abstandsmessung die zweite Vielzahl von Referenzteilmessungen nicht erreicht wird, werden ältere Referenzteilmessungen mit den aktuell nicht gemessenen Phasenbezügen hinzugezogen. Die älteren oder früheren Referenzteilmessungen sind vorzugsweise die jüngsten verfügbaren. So lässt sich der Funktionstest häufiger durchführen, weil nicht auf eine Komplettierung der zweiten Vielzahl gewartet werden muss. Insbesondere ist sogar ein Funktionstest je Abstandsmessung oder Frame möglich, obwohl die beteiligten Referenzteilmessungen über mehrere Frames gesammelt wurden.

Die Steuer- und Auswertungseinheit ist bevorzugt dafür ausgebildet, während der Referenzteilmessungen eine kürzere Integrationszeit zu verwenden als während der Teilmessungen. Die Integrationszeit oder Belichtungszeit bezeichnet das Zeitfenster, in dem die Empfangselemente Photonen für einen entsprechenden Abtastwert sammeln. Wegen der wohldefinierten Verhältnisse im Referenzkanal einschließlich des kurzen und bekannten Lichtwegs genügt es, über einen vergleichsweise kurzen Zeitraum zu integrieren. Dadurch wird die von den Referenzteilmessungen beanspruchte Messzeit weiter reduziert, die durch die Verteilung auf mehrere Abstandsmessungen ohnehin schon begrenzt war. Im Messkanal für möglicherweise ferne und dunkle Objekte dagegen würde diese kürzere Integrationszeit nicht ausreichen.

Die Steuer- und Auswertungseinheit ist bevorzugt dafür ausgebildet, mindestens eine Funktion des Bildsensors anhand nur einer Referenzteilmessung zu prüfen, insbesondere fehlerhafte Pixel aufzufinden. Der eigentliche Funktionstest für die gesamte Messkette mit Bestimmung einer Lichtlaufzeit ist nur mit mehreren Referenzteilmessungen möglich. Aber schon auf Basis nur einer einzigen Referenzteilmessung können ergänzende Funktionsprüfungen erfolgen, um Fehler des Bildsensors aufzudecken. Dadurch werden beispielsweise defekte Pixel, Pixelgruppen oder Fehler in den Zeilen beziehungsweise Spalten oder deren Auslesen und Ansteuerung aufgedeckt.

Die Steuer- und Auswertungseinheit ist bevorzugt dafür ausgebildet, weitere Teilmessungen und/oder Referenzteilmessungen mit mindestens einer zweiten Modulationsfrequenz durchzuführen. Durch Messen mit zwei oder mehr Modulationsfrequenzen wird der Eindeutigkeitsbereich erweitert, wie einleitend erläutert. Für jede Modulationsfrequenz werden jeweils mehrere Teilmessungen benötigt, wobei die Anzahl Messwiederholungen wiederum vorzugsweise, aber nicht notwendig je Modulationsfrequenz dieselbe ist. Es ist denkbar, die Anzahl der Modulationsfrequenz sowie die Modulationsfrequenzen je nach benötigter Reichweite und Messauflösung anzupassen. Im Referenzkanal mit seinen frei einstellbaren Laufzeiten spielt der Eindeutigkeitsbereich keine Rolle. Dennoch wird bevorzugt auch dort für eine noch verlässlichere Diagnose mit mehreren Modulationsfrequenzen getestet, d.h. es werden bevorzugt Referenzteilmessungen bei der ersten Modulationsfrequenz und/oder mindestens der zweiten Modulationsfrequenz durchgeführt. Es entstehen nun noch mehr Kombinationsmöglichkeiten, wie Referenzteilmessungen in Abstandsmessungen eingestreut werden können, da die Modulationsfrequenzen hier weitere Freiheitsgrade schaffen. Dabei ist es zwar vorteilhaft, aber keineswegs zwingend, wenn im Referenzkanal jeweils dieselbe Modulationsfrequenz verwendet wird wie aktuell im Messkanal. Die Referenzlichtquelle kann separat mit einer eigenen Modulationsfrequenz angesteuert werden, sogar einer Modulationsfrequenz, die im Messkanal nie verwendet wird.

Die Steuer- und Auswertungseinheit ist bevorzugt dafür ausgebildet, dem Referenzlicht eine künstliche Verzögerung aufzuprägen. Dadurch wird ein Referenzziel in einer anderen Entfernung emuliert oder vorgetäuscht, als es dem physischen Lichtweg entspricht. Die Verzögerung kann negativ sein, dann rückt das Referenzziel scheinbar näher heran. Künstliche Verzögerungen erweitern und diversifizieren nochmals den Funktionstest.

Die Empfangselemente weisen bevorzugt mehrere Ladungsspeicher auf. Wie einleitend schon erläutert, können durch mehrere Ladungsspeicher gleichzeitig mehrere Abtastwerte gewonnen werden, die Ladungsspeicher ermöglichen demnach mehrere simultane Teilmessungen oder Referenzteilmessungen. Allerdings entfällt bei zu vielen Ladungsspeichern nur noch ein kleiner Teil der Integrationszeit auf den einzelnen Ladungsspeicher, so dass diese Aufteilung der endlichen Anzahl einfallender Photonen ihre Grenzen hat. Besonders vorteilhaft sind genau zwei Ladungsspeicher je Empfangselement, und noch bevorzugter werden die beiden Ladungsspeicher differentiell ausgelesen. Sie liefern dann nicht einen Abtastwert A für den einen Ladungsspeicher und einen zweiten Abtastwert B für den anderen Ladungsspeicher, sondern die Differenz A-B. Auch mit mehreren Ladungsspeichern gibt es innerhalb einer Abstandsmessung wiederholte Teilmessungen mit anderem Phasenbezug. Das dient einerseits dazu, weitere Abtastwerte bei anderen Phasen zu erhalten. Auch ein Versatz um 180° ist vorteilhaft, und zwar sowohl bei differentiellem wie bei einzelnem Auslesen. Denn damit werden zwar in der Theorie dieselben Phasen gemessen, in der Praxis aber gibt es Asymmetrien in den von den Ladungsspeichern gebildeten Kanälen, die durch doppelte zueinander inverse Messung bei 180° kompensierbar werden. Alternativ sind Ausführungsformen mit nur einem Ladungsspeicher je Empfangselement möglich.

Das Referenzlicht ist bevorzugt direkt, über mindestens einen reflektierenden Bereich und/oder einen Lichtleiter auf den Bildsensor geführt. Das lässt Gestaltungsspielräume für das Innere der Kamera. Der reflektierende Bereich kann mit einem anderen Bauelement kombiniert oder darin integriert sein, beispielsweise einer Optik, einer Frontscheibe, einer Abschirmung, eines Gehäuseteils oder dergleichen, und mit einem Lichtleiter sind praktisch beliebige Lichtwege oder Teile davon realisierbar, die sich den Gegebenheiten in der Kamera anpassen.

Die Steuer- und Auswertungseinheit ist bevorzugt dafür ausgebildet ist, eine Framerate zu verändern, mit der Abstandsmessungen wiederholt werden. Die Framerate kann nicht schneller werden als durch die jeweils gewählte erste Anzahl von Teilmessungen und die Reichweite vorgegeben. Möglich ist aber eine Änderung der Reichweite und damit Verkürzung von Teilmessungen sowie eine Verlangsamung der Framerate beziehungsweise eine Zurücknahme einer Verlangsamung. Durch Wartezeiten bei einer Framerate unterhalb des technisch Möglichen wird die Lichtaussendung verringert und Energie gespart.

Die Steuer- und Auswertungseinheit ist bevorzugt dafür ausgebildet, das Sendelicht der Beleuchtungseinheit anzupassen. Dafür gibt es zahlreiche denkbare Kriterien, etwa die erforderliche Reichweite der Messung, bestimmte interessierende Bereiche innerhalb des Erfassungsbereichs oder die Fremdlichtbelastung. Die Anpassung kann durch Ein- und Abschalten von Beleuchtungsmodulen der Beleuchtungseinheit erfolgen oder alternativ mittels einer adaptiven Beleuchtungseinheit, die derart gestaltet ist, dass das Sendelicht örtlich und/oder zeitlich selektiv in der Szene verteilt werden kann. Eine Anpassung des Referenzlichts ist ebenfalls vorstellbar, aber da sich die Verhältnisse im Inneren der Kamera nicht ändern, genügt hier in der Regel eine einmalige, feste Einstellung.

Denkbar ist immerhin, auf den Funktionstest von Empfangselementen zumindest vorübergehend für Empfangselemente zu verzichten, die wenigstens momentan nicht sicherheitsrelevant sind, beispielsweise außerhalb eines interessierenden Bereichs liegen, wo der Erfassungsbereich ohnehin aufgrund einer Anpassung der Beleuchtungseinheit nicht ausreichen beleuchtet ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer 3D-Lichtlaufzeitkamera mit einem direkt beleuchtenden Referenzkanal;
- Fig. 2: eine Draufsicht auf Empfangspixel einer 3D-Lichtlaufzeitkamera mit zwei Ladungsspeichern;
- Fig. 3: eine schematische Blockdarstellung einer 3D-Lichtlaufzeitkamera mit einem reflexiven Referenzkanal;
- Fig. 4a: eine beispielhafte Verteilung jeweils einer Referenzteilmessung am Ende einer Abstandsmessung;
- Fig. 4b: eine beispielhafte Verteilung jeweils einer Referenzteilmessung zwischen Teilmessungen einer Abstandsmessung;
- Fig. 4c: eine beispielhafte zyklisch wechselnde Verteilung jeweils einer Referenzteilmessung zwischen unterschiedlichen Teilmessungen einer Abstandsmessung;
- Fig. 4d: eine beispielhafte unregelmäßige Verteilung jeweils einer Referenzteilmessung zwischen unterschiedlichen Teilmessungen einer Abstandsmessung;
- Fig. 4e: eine beispielhafte Verteilung jeweils einer Referenzteilmessung am Ende einer Abstandsmessung ähnlich Figur 4a, nun jedoch mit vier statt drei Teilmessungen die Abstandsmessung;
- Fig. 4f: eine beispielhafte ungleichmäßige Verteilung jeweils zweier Referenzteilmessungen zwischen unterschiedlichen Teilmessungen einer Abstandsmessung;
- Fig. 5a: eine Darstellung eines herkömmlichen Modulationsschemas mit zwei Abtastwerten zur Abstandsmessung; und
- Fig. 5b: eine Darstellung eines herkömmlichen erweiterten Modulationsschemas mit vier Abtastwerten.

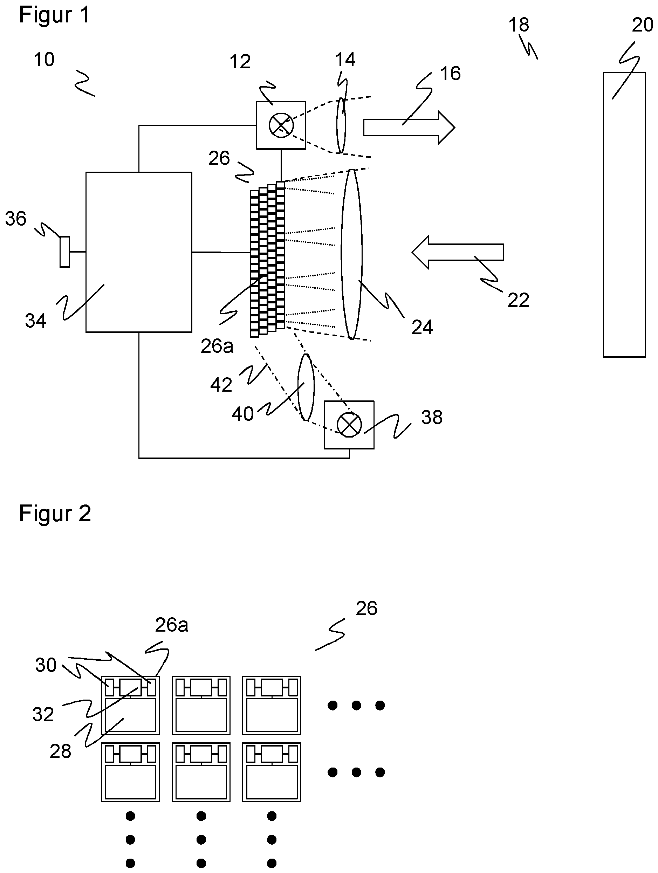

Figur 1 zeigt eine schematische Blockdarstellung einer Kamera 10, die vorzugsweise als 3D-Lichtlaufzeitkamera ausgebildet ist. Eine Beleuchtungseinheit 12 sendet durch eine Sendeoptik 14 moduliertes Sendelicht 16 in einen Erfassungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Zur Reduktion der gegenseitigen Beeinflussung mehrerer Systeme kann auch ein künstlicher Jitter beziehungsweise eine Art Codierung (Spread Spectrum) verwendet werden. Durch die Frequenz entsteht ein begrenzter Eindeutigkeitsbereich der Abstandsmessung, so dass für große Reichweiten der Kamera 10 kleine Modulationsfrequenzen erforderlich sind. Alternativ werden Messungen bei zwei bis drei oder mehr Modulationsfrequenzen durchgeführt, um in Kombination der Messungen den Eindeutigkeitsbereich zu vergrößern.

Trifft das Sendelicht 16 in dem Erfassungsbereich 18 auf ein Objekt 20, so wird ein Teil als Empfangslicht 22 zu der Kamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix oder Zeile angeordneten Empfangselementen oder Empfangspixeln 26a auf. Die Auflösung des Bildsensors 26 kann von zwei oder einigen wenigen bis hin zu tausenden oder Millionen Empfangspixeln 26a reichen.

Figur 2 zeigt eine Draufsicht auf einen Ausschnitt der Empfangspixel 26a des Bildsensors 26. Diese Ansicht ist rein funktional und schematisch, der konkrete Halbleiteraufbau des Bildsensors 26 ist nicht Gegenstand dieser Beschreibung. Die Empfangspixel 26a weisen jeweils eine lichtempfindliche Fläche 28 und mindestens einen Ladungsspeicher 30 auf, beispielsweise einen Kondensator. In der Ausführungsform gemäß Figur 2 sind es beispielhaft zwei Ladungsspeicher 30. Weitere Schaltelemente der Empfangspixel 26a sind sehr schematisch und rein symbolisch in einem Block als Demodulationseinheit 32 zusammengefasst. Die Empfangspixel 26a detektieren in ihren Ladungsspeichern 30 während einer Messdauer oder Integrationszeit das Empfangslicht 22. Dabei steuert die Demodulationseinheit 32 entsprechend der auch für das Modulieren des Sendelichts 16 verwendeten Modulationsfrequenz, wann in dem Ladungsspeicher 30 Ladungen aufgesammelt werden. Es findet folglich eine Demodulation entsprechend einem Lock-In-Verfahren statt.

Die Pixelanordnung ist typischerweise eine Matrix, so dass sich eine laterale Ortsauflösung in einer X-Richtung und einer Y-Richtung ergibt, was sich mit der Z-Richtung der Abstandsmessung zu den dreidimensionalen Bilddaten ergänzt. Diese 3D-Erfassung ist vorzugsweise gemeint, wenn von einer 3D-Kamera, einer 3D-Lichtlaufzeitkamera oder dreidimensionalen Bilddaten gesprochen wird. Prinzipiell sind aber auch andere Pixelanordnungen denkbar, etwa eine Pixelzeile, die in einer Matrix ausgewählt wird oder die den ganzen Bildsensor einer Zeilenkamera bildet.

Zurück zu Figur 1, werden die in den Ladungsspeichern 30 der Empfangspixel 26a aufgesammelten Ladungsmengen ausgelesen, digitalisiert und an eine Steuer- und Auswertungseinheit 34 übergeben. Durch die beiden Ladungsspeicher 30 werden zwei Abtastwerte erzeugt. Alternativ zu einem einzelnen Auslesen beider Abtastwerte sind auch differentielle Empfangspixel 26a denkbar, die als einen einzigen Abtastwert eine Differenz der beiden Ladungsspeicher 30 ausgeben. Die für die Phasenbestimmung relevante Information ist dabei praktisch gleichwertig, da in der Auswertung ohnehin Differenzen gebildet werden. Um zusätzliche Abtastwerte zu gewinnen, wird die beschriebene Teilmessung mit Sammeln und Auslesen von Ladungsspeichern 30 n-mal wiederholt, vorzugsweise zwei bis vier Mal. Dabei wird jeweils zwischen den Teilmessungen die Phase zwischen der für das Sendelicht 16 verwendeten Modulationsfrequenz und der in der Demodulationseinheit 32 zum Demodulieren verwendeten Modulationsfrequenz variiert.

Aus den mehreren Abtastwerten rekonstruiert nun die Steuer- und Auswertungseinheit 34 den Phasenversatz aufgrund der Lichtlaufzeit durch den Erfassungsbereich 18, der in einen Abstandswert je Empfangspixel 26a umgerechnet werden kann. Es entsteht ein dreidimensionales Bild, Abstandsbild oder Tiefenbild, das an einer Schnittstelle 36 ausgegeben wird. Die Schnittstelle 36 oder alternativ eine oder mehrere weitere, nicht gezeigte Anschlüsse dienen umgekehrt der Eingabe von Steuersignalen oder Parametrierungen der Kamera 10.

Die Abstandsmessung erfolgt somit nach einem indirekten Lichtlaufzeitverfahren, dessen Prinzip in der Einleitung bereits beschrieben wurde. Beispielsweise erfolgen für die Bestimmung eines Abstandswerts drei Teilmessungen nacheinander mit jeweiligem Phasenbezug 0°, 120° und 240° oder vier Teilmessungen nacheinander mit jeweiligem Phasenbezug 0°, 90°, 180° und 270°, wobei für letztere Ausführungsform die Berechnungen des Abstands einleitend unter Bezugnahme auf die Figuren 5a-b angegeben wurden.

Es gibt hierzu zahlreiche Varianten, die sich in einer Anzahl der Teilmessungen und des jeweiligen Phasenbezugs zwischen Sendermodulation und Empfängermodulation innerhalb der Teilmessungen unterscheiden. So wären, um ein beliebiges und praktisch nicht sonderlich relevantes Beispiel zu geben, auch sieben Teilmessungen bei 6°, 90°, 105°, 170°, 250°, 300° und 310° möglich. Weiterhin sind alternativ zu der in Figur 2 gezeigten Ausführungsform mit zwei Ladungsspeichern 30 mehr oder nur ein einziger Ladungsspeicher vorstellbar. Die Anzahl Ladungsspeicher 30 ermöglicht die gleichzeitige Gewinnung mehrerer Abtastwerte, so dass in gewisser Weise durch Ladungsspeicher simultan und nacheinander ausgeführte Teilmessungen gegeneinander ausgetauscht werden können.

Bevorzugt ist die dargestellte Ausführungsform mit zwei Ladungsspeichern 30, die um 180° phasenversetzt zueinander abtasten und die dann noch bevorzugter differentiell ausgelesen werden. Mit wie ohne differentielles Auslesen ist es vorteilhaft, jeweils eine zusätzliche Teilmessung im Versatz von 180° zu einer anderen Teilmessung durchzuführen. Bei drei Teilmessungen wird dann vorzugsweise im Phasenbezug 0°, 180°; 120°, 300°; 240°, 60° und bei vier Teilmessungen im Phasenbezug 0°, 180° ; 90°, 270° ; 180° , 0°; 270°, 90° gemessen. Gerade letzteres erscheint redundant, dient aber dazu, hardwarebedingte Unterschiede in den beiden durch die Ladungsspeicher 30 gebildeten Kanälen zu kompensieren. Es liegen dann insgesamt acht einzelne Abtastwerte A, B, C, D, A', B', C', D' beziehungsweise bei differentiellen Pixeln vier Differenzen von Abtastwerten A-B, C-D, A`-B`, C`-D` vor. Die gesuchte Phase ergibt sich dann als arctan(((C-D)-(C'-D'))/((A-B)-(A'-B'))). Bei anderen Anzahlen von Teilmessungen beziehungsweise anderem gegenseitigem Phasenversatz ergibt sich natürlich eine andere Formel, die Rekonstruktion der Phase bleibt aber mit bekannten mathematischen Mitteln möglich, die mit geringen Rechenressourcen umgesetzt werden können.

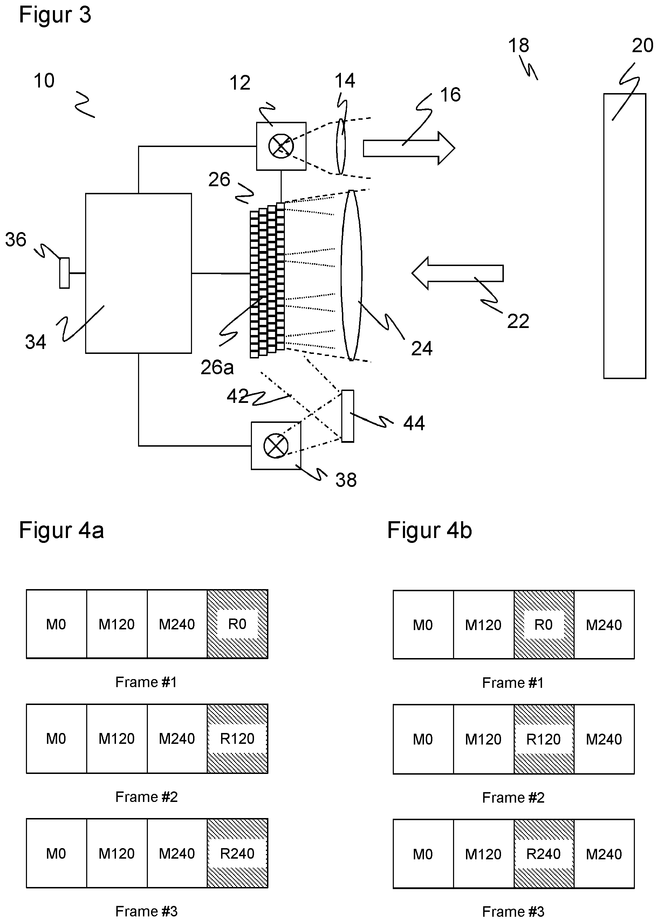

Für einen Funktionstest der Kamera 10 ist zusätzlich zu der Beleuchtungseinheit 12 eine Diagnose- oder Referenzbeleuchtungseinheit 38 vorgesehen, die über eine optionale Referenzoptik 40 Referenzlicht 42 erzeugt, mit dem der Bildsensor 26 intern beleuchtet wird. Intern heißt, dass der Lichtweg des Referenzlicht 42 innerhalb der Kamera 10, insbesondere innerhalb von deren nicht gezeigtem Gehäuse verläuft, und somit nicht in die Szene des Erfassungsbereichs 18 gelangt und damit von der Szene und deren Umgebungsbedingungen nicht beeinflusst wird. In der Ausführungsform gemäß Figur 1 wird das Referenzlicht 42 direkt von einer Referenzbeleuchtungseinheit 38 auf den Bildsensor 26 eingekoppelt, die vorzugsweise nahe am Bildsensor 26 und alternativ zu der Darstellung unter Vermeidung von Abschattungen zwischen Bildsensor 26 und Empfangsoptik 24 angeordnet sein kann. Später werden unter Bezugnahme auf die Figur 3 alternative Ausgestaltungen des Referenzkanals vorgestellt.

Für den Aufbau und die Lichtquelle der Referenzbeleuchtungseinheit 38 gelten sinngemäß die obigen Ausführungen zur Beleuchtungseinheit 12, wobei wegen des kurzen internen Lichtwegs an die Referenzbeleuchtungseinheit 38 geringere Ansprüche gestellt sind. Es kann deshalb eine kompakte und günstige Laserdiode oder LED verwendet werden, da ohnehin nur eine geringe Lichtleistung benötigt wird und eine leistungsfähige Lichtquelle sogar gedrosselt werden müsste, um Sättigung zu vermeiden. Die Referenzbeleuchtungseinheit 38 ist separat von dem Bildsensor 26 mit einem Modulationssignal ansteuerbar. Hierzu kann beispielsweise ein zweiter Ansteuerungskanal des Bildsensors 26 verwendet werden, falls vorhanden, oder alternativ wird über entsprechende Enable-Signale gewählt, ob die Beleuchtungseinheit 12 oder die Referenzbeleuchtungseinheit 38 mit dem Modulationssignal beaufschlagt wird.

Damit entsteht neben dem eigentlichen Messkanal, der Abstände im Erfassungsbereich 18 misst, ein Referenzkanal für den Funktionstest. Über den Referenzkanal messen die Empfangspixel 26a Referenzabstandswerte analog den Abstandswerten des Messkanals. In einem intakten System müssen die Referenzabstandswerte eine Erwartungshaltung entsprechen, nämlich den internen Lichtwegen von der Referenzbeleuchtungseinheit 38 zu dem Bildsensor 26. Auf diese internen Lichtwege haben dynamische Änderungen der Szene des Erfassungsbereichs 18 keinen Einfluss. Es ist denkbar, durch zusätzliche künstliche Verzögerungen zwischen Modulation und Demodulation unterschiedliche Abstände für den zu messenden Referenzabstandswert zu emulieren. Damit wird insbesondere ein möglicher phasenabhängiger Messfehler der Diagnose zugänglich. Die jeweilige Erwartungshaltung für ein intaktes System wird anfangs eingelernt oder aufgrund theoretische Überlegungen oder Simulationen vorgegeben.

Die Steuer- und Auswertungseinheit 34 erkennt somit anhand des Referenzkanals, wenn die Kamera 10 ihre Aufgabe nicht mehr verlässlich erfüllen kann. In sicherheitstechnischer Anwendung wird vorzugsweise im Fehlerfall ein sicherheitsgerichtetes Signal ausgegeben, über das eine Maschine, ein Fahrzeug, ein Roboter oder eine sonstige überwachte Gefahrenquelle in einen sicheren Zustand überführt wird, sei es durch Verlangsamen, Ausweichen oder einen Stopp.

Die Aufteilung der Figuren 1 und 2 in einen Bildsensor 26 mit Empfangspixeln 26a, die jeweils eine Demodulationseinheit 32 aufweisen, und eine Steuer- und Auswertungseinheit 34 ist nur eine bevorzugte Ausführungsform. Die Steuer- und Auswertungsfunktionalität kann auch anders verteilt sein. Die Steuer- und Auswertungseinheit 34 muss auch keineswegs monolithisch aus einem einzigen Baustein bestehen wie dargestellt, sondern kann aus einem oder mehreren digitalen Rechenbausteinen zusammengesetzt sein, wie Mikroprozessoren, FPGAs (Field-Programmable Gate Array) oder ASICs (Application-Specific Integrated Circuit). Weiterhin ist die dargestellte Beleuchtung eine Flächenbeleuchtung, wozu beispielsweise ein Diffusor als Teil der Sendeoptik 14 eingesetzt wird. In einer anderen Ausführungsform wird eine Anordnung zahlreicher Einzellichtquellen der Beleuchtungseinheit 12 scharf in den Erfassungsbereich 18 projiziert, so dass im Ergebnis die Empfangspixel 26a einzeln beleuchtet werden und die Reichweite sich erhöht. Weiterhin kann die Beleuchtung abweichend von der Darstellung nicht in die Kamera 10 integriert, sondern davon baulich beziehungsweise räumlich getrennt werden.

Figur 3 zeigt eine weitere Ausführungsform der Kamera 10. Gegenüber der Figur 1 ist nur der Referenzkanal verändert. Der Lichtweg des Referenzlichts 42 von der Referenzbeleuchtung 38 auf den Bildsensor 26 ist hier nicht direkt, sondern mit Hilfe eines Reflexionselements 44 einmal gefaltet. Eine optionale Referenzoptik 40 wäre ebenfalls möglich. Das Reflexionselement 44 kann ein separates Element sein, oder es wird ein wenigstens teilreflektierender Bereich eines anderen Bauelements genutzt oder dort angebracht, etwa an einer der Optiken 14, 24, einer Frontscheibe, einer Abschirmung eines Sender-Empfänger-Chips oder eines Gehäusebauteils. Der Lichtweg des Referenzlichts 42 kann auch mehrfach gefaltet oder umgelenkt werden. Als weitere Alternative sind zumindest Abschnitte dieses Lichtwegs in einem Lichtleiter denkbar, wobei Reflexionen und Lichtleiter miteinander kombinierbar sind. Letztlich kommt es nur darauf an, dass ausreichend Referenzlicht 44 auf einem internen, reproduzierbaren Lichtweg auf dem Bildsensor 26 ankommt und dort die zu testenden Empfangspixel 26a beleuchtet.

Die Figuren 4a-f zeigen verschiedene beispielhafte Schemata, wie Referenzteilmessungen für den Funktionstest in die Teilmessungen der Abstandsmessungen eingestreut werden können. Dadurch wird der Funktionstest oder die Referenzmessung auf mehrere Abstandsmessungen oder Frames der Kamera 10 verteilt. So werden die erforderliche zusätzliche Zeit und Verlustleistung für den Funktionstest auf ein längeres Zeitintervall gestreckt.

Figur 4a zeigt eine erste Ausführungsform, in der einer Abstandsmessung drei Teilmessungen mit einem Phasenbezug zwischen Modulation und Demodulation von 0°, 120° und 240° zugrunde liegen, und ebenso drei Referenzteilmessungen der Bestimmung eines Referenzabstandswerts für den Funktionstest. Die Referenzteilmessungen werden in dieser Ausführungsform jeweils am Ende einer Abstandsmessung beziehungsweise eines Frames (Bildaufnahmeperiode) eingeschoben, und zwar nur eine Referenzteilmessung je Frame. Die eingeschobene Referenzteilmessung hat ihren eigenen Phasenbezug unabhängig von den Teilmessungen, der von Frame zu Frame wechselt. Im ersten Frame erfolgt eine Referenzteilmessung mit Phasenbezug 0°, im zweiten Frame mit Phasenbezug 120° und im dritten Frame mit Phasenbezug 240°. Die jeweiligen Zwischenergebnisse werden beispielsweise in einer Vorverarbeitung, vorzugsweise einem FPGA, oder irgendwo sonst in einem der Steuer- und Auswertungseinheit 34 zugänglichen Speicherbereich abgelegt. Nach dem dritten Frame liegt ein vollständiger Referenzkanal-Datensatz vor, aus dem ein Referenzabstandswert erzeugt wird. Dann wiederholt sich der dargestellte Zyklus.

Figur 4b zeigt eine weitere Ausführungsform, in der die Referenzteilmessungen nun nicht mehr am Ende eines Frames, sondern zwischen die zweite und dritte Teilmessung eingeschoben werden. Ebenso könnten sie zwischen die erste und zweite Teilmessung eingeschoben oder an den Anfang eines Frames gestellt werden. Der Zeitpunkt am Anfang eines Frames ist unter anderem wegen der Rechenzeiten zwischen zwei Frames nicht unbedingt äquivalent zu dem Zeitpunkt am Ende des vorhergehenden Frames.

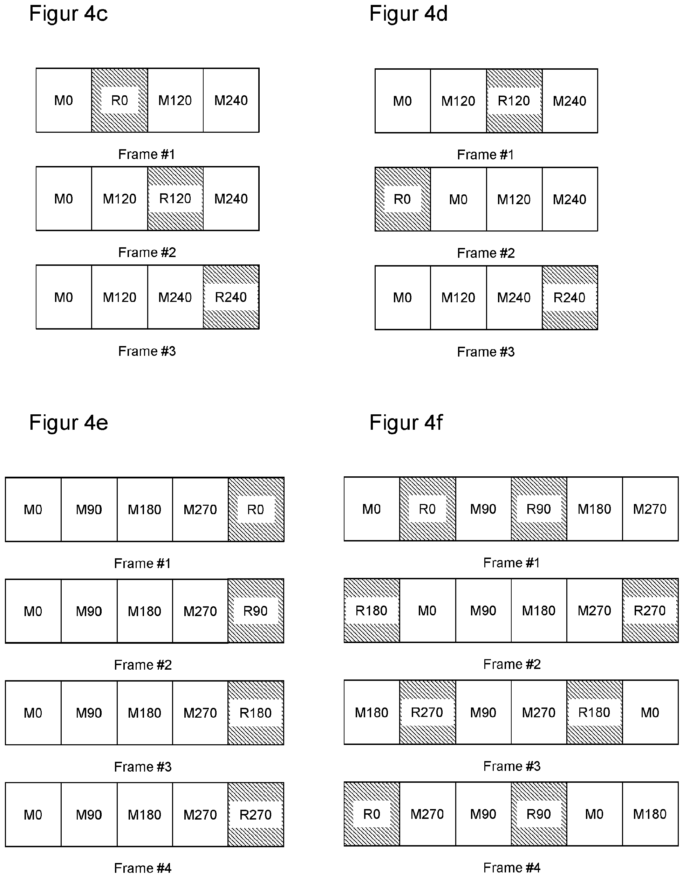

Figur 4c zeigt eine weitere Ausführungsform, in der die Referenzteilmessungen zyklisch alternierend zwischen unterschiedlichen Teilmessungen eines Frames eingeschoben werden. Dieser Zyklus könnte alternativ zu einem anderen Zeitpunkt zwischen anderen Teilmessungen starten, in die Gegenrichtung verlaufen und dergleichen mehr.

Figur 4d zeigt eine weitere Ausführungsform, die verdeutlichen soll, dass es selbst bei fester Anzahl von Teilmessungen je Frame, von Referenzteilmessungen je Frame und je Funktionstest und festgelegten Phasenbeziehung noch sehr viele weitere Schemata gibt, die Referenzteilmessungen innerhalb der Frames und über die Frames zu verteilen. In der dargestellten Ausführungsform wechselt der Zeitpunkt der Referenzteilmessung innerhalb eines Frames in unregelmäßiger Weise, die sich nach dem dritten Frame so wiederholt oder weiterhin unregelmäßig verändert. Außerdem ist noch die Abfolge der Phasenbezüge der Referenzteilmessungen verändert, es wird nun zuerst bei 120°, dann bei 0° und dann bei 240° gemessen. Auch das kann sich nach dem dritten Frame wiederholen oder in der Reihenfolge ändern. Die Abfolge der Phasenbezüge der Teilmessungen innerhalb eines Frames könnte sich ebenfalls von Frame zu Frame ändern.

Figur 4e zeigt eine weitere Ausführungsform, die im Prinzip derjenigen der Figur 4a entspricht, bei der jeweils genau eine Referenzteilmessung am Ende jedes Frames durchgeführt wird. Allerdings hat sich die Anzahl der Teilmessungen je Frame auf vier erhöht, und dementsprechend sind die Phasenbezüge nun 0°, 90°, 180° und 270°. Entsprechendes gilt für die Referenzteilmessungen, die nun im ersten Frame bei einem Phasenbezug von 0°, im zweiten Frame bei einem Phasenbezug von 90°, im dritten Frame bei einem Phasenbezug von 180° und im vierten Frame bei einem Phasenbezug von 270° durchgeführt wird. Es versteht sich, dass weitere Ausführungsform analog zu Figur 4b-d möglich sind, bei denen die Referenzteilmessungen ihren Zeitpunkt innerhalb der Frames sowie die Abfolge der Phasenbezüge der Teilmessungen und/oder Referenzteilmessungen variieren. Ebenso sind noch andere Anzahlen von Teilmessungen und Referenzteilmessungen wie fünf und mehr und andere Phasenbezüge vorstellbar.

Figur 4f zeigt eine weitere Ausführungsform, in der nun zwei Referenzteilmessungen je Frame durchgeführt werden. Das dargestellte Beispiel verwendet unregelmäßige Zeitpunkte der Referenzteilmessungen innerhalb der Frames und eine nicht aufsteigende Abfolge der Phasenbezüge, wobei die konkrete Darstellung nur stellvertretend für die möglichen Unregelmäßigkeiten steht. Sich wiederholende gleichartige Zyklen oder insgesamt regelmäßige Zeitpunkte, etwa am Anfang, in der Mitte oder am Ende eines Frames und/oder eine aufsteigende Abfolge der Phasenbezüge sind ebenso denkbar. Eine weitere nicht gezeigte Variante variiert die Anzahl der Referenzteilmessungen, die jeweils in einen Frame eingeschoben werden, beispielsweise eine Referenzteilmessung in den ersten Frame, zwei Referenzteilmessungen in den zweiten Frame, keine Referenzteilmessung in den dritten Frame und eine Referenzteilmessung in den vierten Frame, was sich dann zyklisch wiederholt oder unregelmäßig fortsetzt. Weiter denkbar sind längere Zyklen, bei denen Referenzteilmessungen jeweils nur in jeden zweiten, dritten oder allgemein i-ten Frame eingeschoben werden.

Die in den Figuren 4a-f gezeigten Ausführungsformen sind nicht abschließende Beispiele, die untereinander kombiniert werden und selbst dann nur einige von zahllosen Möglichkeiten darstellen. Weiter variieren lässt sich die Anzahl der Teilmessungen einer Abstandsmessung und/oder die Anzahl der Referenzteilmessungen, die einem Funktionstest zugrunde liegen, desgleichen die zugehörigen Phasenbezüge. Das ist sogar für die Abstandsmessung und den Funktionstest unterschiedlich möglich, beispielsweise eine Abstandsmessung mit vier Teilmessungen bei 0°, 90°, 180° und 270° und ein Funktionstest aus drei Referenzteilmessungen bei 0°, 120° und 240°. Es können differentielle Pixel eingesetzt werden. Die Reihenfolge, mit der die Phasenbezüge in den Teilmessungen beziehungsweise den Referenzteilmessungen aufeinanderfolgen, kann zyklisch und nicht-zyklisch durcheinandergebracht werden. Die Referenzmessungen können an unterschiedlichen Zeitpunkten eines jeweiligen Frames eingeschoben werden, und dies von Frame zu Frame gleich oder unterschiedlich.

Eine in den Figuren 4a-f nicht repräsentierte Variationsmöglichkeit betrifft die verwendeten Modulationsfrequenzen. Im Prinzip sind Messkanals und Referenzkanal in dieser Beziehung unabhängig voneinander. Es ist also denkbar, dass Abstandswerte mit einer ersten Modulationsfrequenz gemessen werden und die Referenzteilmessungen eine ganz andere Modulationsfrequenz verwenden. Oder es werden Abstandswerte mit größerem Eindeutigkeitsbereich mit einer ersten Modulationsfrequenz und einer zweiten Modulationsfrequenz gemessen, während die Referenzteilmessungen je nach Ausführungsform diese erste Modulationsfrequenz und zweite Modulationsfrequenz, nur eine davon, eine andere Modulationsfrequenz oder sogar zwei und mehr andere Modulationsfrequenzen nutzen. Dadurch ergibt sich mindestens ein weiterer Freiheitsgrad der Modulationsfrequenz, der mit allen zuvor geschilderten Variationsmöglichkeiten kombinierbar ist.

Ein Funktionstest basiert somit auf Referenzteilmessungen aus unterschiedlichen Frames. Das bedeutet aber keineswegs, dass ein Funktionstest nur alle n>1 Frames möglich ist, wenn sich jeweils ein neuer Satz Referenzteilmessungen vervollständigt hat. Das ist zwar möglich, führt aber zu einer recht trägen Ansprechzeit des Funktionstests, die für hohe Sicherheitsniveaus nicht unbedingt ausreicht.

Um den Funktionstest innerhalb weniger Frames und vorzugsweise mit jedem Frame durchführen zu können, wird vorzugsweise ein rollierendes Verfahren analog zu einem gleitenden Mittelwert eingesetzt. Dabei werden der Bestimmung eines Referenzabstandswert eine Referenzteilmessung aus einem aktuellen Frame und gespeicherte Referenzteilmessungen zu den übrigen noch benötigten Phasenbeziehungen aus früheren Frames zugrundegelegt, vorzugsweise den unmittelbar vorangegangenen Frames. Die Erwartungshaltung an den Referenzabstandswert ist vorzugsweise so eng gehalten, dass bereits eine aus Sicherheitssicht nicht tolerierbare Abweichung beziehungsweise ein Fehler nur in der aktuellen Referenzteilmessung erkannt wird.

Dieses rollierende Verfahren wird noch kurz am Beispiel der Figur 4a konkretisiert, für alle anderen Varianten lässt es sich analog verwenden. Im ersten Frame erfolgt eine Referenzteilmessung mit Phasenbezug 0°, ein Referenzabstandswert lässt sich daraus noch nicht gewinnen. Im zweiten Frame erfolgt eine Referenzteilmessung mit Phasenbezug 120°, und die beiden nun vorliegenden Referenzteilmessungen genügen immer noch nicht für die Bestimmung eines Referenzabstandswert. Im dritten Frame erfolgt eine Referenzteilmessung mit Phasenbezug 240°, und nun hat sich das System innerhalb von kleinen Sekundenbruchteilen erstmals eingeschwungen, ein Referenzabstandswert kann aus den drei vorliegenden Referenzteilmessungen bei 0°, 120°, 240° bestimmt werden, auch wenn nur die Referenzteilmessung bei 240° aus dem aktuellen Frame stammt. Im vierten Frame erfolgt wieder eine Referenzteilmessung mit Phasenbezug 0°, mit der für die Bestimmung eines Referenzabstandswert die ältere Referenzteilmessung mit Phasenbezug 0° aus dem ersten Frame ersetzt wird.

Somit kann es erreicht werden, dass sowohl die Ansprechzeit der eigentlichen Messung als auch des Funktionstests kurz bleibt. Durch das Verteilen der Referenzteilmessungen auf mehrere Frames wird die Bestimmung eines Abstandswerts kaum merklich verzögert. Zugleich sind Funktionstests durch das beschriebene rollierende Verfahren mit kurzer Ansprechzeit bis hin zu einmal je Frame möglich. Somit lassen sich erfindungsgemäß auch hohe Sicherheitsniveaus erreichen, wie SIL 2 oder PL d.

Die Gesamtintegrationszeit für alle Teilmessungen nimmt typischerweise etwa 1/3 der Zykluszeit der Kamera 10 ein. Anschließend werden die Rohdaten verrechnet und das eigentliche 3D-Bild berechnet, das dann für die Anwendung ausgewertet wird. Die genannte Zykluszeit entspricht damit der möglichen Framerate, die aber noch künstlich verlangsamt sein kann, um beispielsweise einer äußeren Erwartung an den Schnittstellen der Kamera 10 oder einer Konfiguration zu entsprechen.

Die Integrationszeit für die Referenzteilmessungen kann im Vergleich zu der Integrationszeit für eine Teilmessung sehr gering sein. Die Signalintensität von der Referenzbeleuchtungseinheit 38 ist gut bekannt und wegen der Unabhängigkeit von der Szene im Erfassungsbereich 18 reproduzierbar und nicht gedämpft. Eine kurze Integrationszeit verkürzt nicht nur die möglichst geringe Dauer, die eine Referenzteilmessung in einem Frame beansprucht, denn die Ansprechzeit der Kamera 10 soll durch den Funktionstest möglichst gar nicht oder jedenfalls nur wenig beeinträchtigt werden. Sie reduziert zudem eine Verlustleistung im Bildsensor 26 bei nur kurzem Anliegen der Demodulationssignale, denn die während der Integrationszeit laufende Modulation und Demodulation ist für einen Großteil der Verlustleistung im Bildsensor 26 und sogar in der gesamten Kamera 10 verantwortlich. Die durch kurze Integrationszeit gewonnene Zeit kann alternativ für einen noch höheren Diagnosegrad genutzt werden, der zusätzliche Phasenbeziehungen, Frequenzänderungen und dergleichen abtestet. Das geht dann aber mit einer vergleichsweise höheren Verlustleistung einher.

Zusätzlich zu dem beschriebenen Funktionstest der gesamten Messkette anhand mehrere Referenzeilmessungen kann die jeweils aktuelle Referenzteilmessung noch für sich und ohne Lichtlaufzeitauswertung auf lokal im Bild auftretende Fehler ausgewertet werden, wie defekte Pixel, Spalten oder Zeilen. Derartige lokale Fehler sind schon ohne die Verrechnung mehrerer Referenzteilmessungen zu einem Referenzabstandswert erkennbar.

Alternativ zu der Verteilung von Referenzteilmessungen auf mehrere Frames könnte innerhalb eines einzigen Frames ein vollständiger Referenzkanal-Datensatz mit allen dafür erforderlichen Referenzteilmessungen aufgenommen werden, und dies erfolgt dann mit jedem Frame oder alle n Frames. Das funktioniert aber nur, wenn der Bildsensor 26 und die nachgelagerte Rohdatenverarbeitung schnell genug sind, ansonsten führt das zu verlängerten Ansprechzeiten der eigentlichen Messung beziehungsweise einer verringerten Framerate. Dieses Problem wird durch die Verteilung von Referenzteilmessungen zwischen die Teilmessungen unterschiedlicher Frames gelöst.

## Patentansprüche

1. Kamera (10), insbesondere 3D-Lichtlaufzeitkamera, zur Erfassung dreidimensionaler Bilddaten aus einem Erfassungsbereich (18),
die eine Beleuchtungseinheit (12) zum Aussenden von Sendelicht (16) in den Erfassungsbereich (18), wobei das Sendelicht mit mindestens einer ersten Modulationsfrequenz moduliert ist,
einen Bildsensor (26) zum Empfangen von Empfangslicht (22) aus dem Erfassungsbereich (18), wobei der Bildsensor (26) eine Vielzahl von Empfangselementen (26a) zum Erzeugen eines jeweiligen Empfangssignals umfasst,
eine Vielzahl von Demodulationseinheiten (32) zum Demodulieren der Empfangssignale mit der ersten Modulationsfrequenz zur Gewinnung von Abtastwerten,
eine Referenzbeleuchtungseinheit (38) zum Aussenden von Referenzlicht (42), das mit der ersten Modulationsfrequenz moduliert und innerhalb der Kamera (10) auf den Bildsensor (26) geführt ist,
sowie eine Steuer- und Auswertungseinheit (34) aufweist, die dafür ausgebildet ist, für eine Abstandsmessung die Beleuchtungseinheit (12) und/oder die Demodulationseinheiten (32) für eine erste Anzahl Teilmessungen bei jeweils unterschiedlichem Phasenversatz zwischen der ersten Modulationsfrequenz für das Sendelicht (16) und der ersten Modulationsfrequenz für das Demodulieren anzusteuern und aus den durch die Teilmessungen je Empfangselement (26a) gewonnenen Abtastwerten einen Abstandswert zu bestimmen
und für einen Funktionstest die Referenzbeleuchtungseinheit (38) und/oder die Demodulationseinheiten (32) für eine zweite Anzahl Referenzteilmessungen bei jeweils unterschiedlichem Phasenversatz zwischen der ersten Modulationsfrequenz für das Referenzlicht (42) und der ersten Modulationsfrequenz für das Demodulieren anzusteuern und aus den durch die Referenzteilmessungen je Empfangselement (26a) gewonnenen Abtastwerten einen Referenzabstandswert zu bestimmen,
**dadurch gekennzeichnet,**
**dass** die Steuer- und Auswertungseinheit (34) weiterhin dafür ausgebildet ist, die Referenzteilmessungen für einen Funktionstest über mehrere Abstandsmessungen zu verteilen.

2. Kamera (10) nach Anspruch 1,
wobei die Steuer- und Auswertungseinheit (34) dafür ausgebildet ist, während einer Teilmessung nur die Beleuchtungseinheit und während einer Referenzteilmessung nur die Referenzbeleuchtungseinheit zu aktivieren.

3. Kamera (10) nach Anspruch 1 oder 2,
wobei die erste Anzahl und/oder die zweite Anzahl mindestens drei beträgt.

4. Kamera (10) nach einem der vorhergehenden Ansprüche,
wobei die erste Anzahl ungleich der zweiten Anzahl ist.

5. Kamera (10) nach einem der vorhergehenden Ansprüche,
wobei die Steuer- und Auswertungseinheit (34) dafür ausgebildet ist, je Abstandsmessung eine Referenzteilmessung oder zwei Referenzteilmessungen durchzuführen und/oder in jeder i-ten Abstandsmessung mindestens eine Referenzteilmessung durchzuführen.

6. Kamera (10) nach einem der vorhergehenden Ansprüche,
wobei die Steuer- und Auswertungseinheit (34) dafür ausgebildet ist, die erste Anzahl, die zweite Anzahl, den Phasenversatz der Teilmessungen, den Phasenversatz der Referenzteilmessungen und/oder die Verteilung von Referenzteilmessungen auf Abstandsmessungen zu variieren.

7. Kamera (10) nach einem der vorhergehenden Ansprüche,
wobei die Steuer- und Auswertungseinheit (34) dafür ausgebildet ist, einen Referenzabstandswert aus mindestens einer aktuellen Referenzteilmessung einer aktuellen Abstandsmessung und mindestens einer früheren Referenzteilmessung einer früheren Abstandsmessung, insbesondere auf diese Weise mit jeder Abstandsmessung einen Referenzabstandswert zu bestimmen.

8. Kamera (10) nach einem der vorhergehenden Ansprüche,
wobei die Steuer- und Auswertungseinheit (34) dafür ausgebildet ist, während der Referenzteilmessungen eine kürzere Integrationszeit zu verwenden als während der Teilmessungen.

9. Kamera (10) nach einem der vorhergehenden Ansprüche,
wobei die Steuer- und Auswertungseinheit (34) dafür ausgebildet ist, mindestens eine Funktion des Bildsensors (26) anhand nur einer Referenzteilmessung zu prüfen, insbesondere fehlerhafte Pixel aufzufinden.

10. Kamera (10) nach einem der vorhergehenden Ansprüche,
wobei die Steuer- und Auswertungseinheit (34) dafür ausgebildet ist, weitere Teilmessungen und/oder Referenzteilmessungen mit mindestens einer zweiten Modulationsfrequenz durchzuführen.

11. Kamera (10) nach einem der vorhergehenden Ansprüche,
wobei die Steuer- und Auswertungseinheit (34) dafür ausgebildet ist, dem Referenzlicht eine künstliche Verzögerung aufzuprägen.

12. Kamera (10) nach einem der vorhergehenden Ansprüche,
wobei die Empfangselemente (26a) mehrere Ladungsspeicher (30) aufweisen, insbesondere zwei Ladungsspeicher (30), die differentiell ausgelesen werden.

13. Kamera (10) nach einem der vorhergehenden Ansprüche,
wobei das Referenzlicht (42) direkt, über mindestens einen reflektierenden Bereich (44) und/oder einen Lichtleiter auf den Bildsensor (26) geführt ist.

14. Kamera (10) nach einem der vorhergehenden Ansprüche,
wobei die Steuer- und Auswertungseinheit (34) dafür ausgebildet ist, eine Framerate zu verändern, mit der Abstandsmessungen wiederholt werden, und/oder das Sendelicht (16) der Beleuchtungseinheit (12) anzupassen.

15. Verfahren zur Erfassung dreidimensionaler Bilddaten aus einem Erfassungsbereich (18),
bei dem Sendelicht (16) in den Erfassungsbereich (18) ausgesandt wird, das mit mindestens einer ersten Modulationsfrequenz moduliert ist,
Empfangslicht (22) aus dem Erfassungsbereich (18) empfangen und daraus ortsaufgelöst (26a) eine Vielzahl von Empfangssignalen erzeugt wird,
die Empfangssignale mit der ersten Modulationsfrequenz zur Gewinnung von Abtastwerten demoduliert werden,
für eine Abstandsmessung eine erste Anzahl Teilmessungen bei jeweils unterschiedlichem Phasenversatz zwischen der ersten Modulationsfrequenz für das Sendelicht (16) und der ersten Modulationsfrequenz für das Demodulieren durchgeführt und aus den durch die Teilmessungen gewonnenen Abtastwerten ortsaufgelöst ein jeweiliger Abstandswert bestimmt wird,
Referenzlicht (42) ausgesandt wird, das mit der ersten Modulationsfrequenz moduliert ist und ohne Lichtweg durch den Erfassungsbereich (18) wieder empfangen wird
und für einen Funktionstest eine zweite Anzahl Referenzteilmessungen bei jeweils unterschiedlichem Phasenversatz zwischen der ersten Modulationsfrequenz für das Referenzlicht (42) und der ersten Modulationsfrequenz für das Demodulieren durchgeführt und aus den durch die Referenzteilmessungen gewonnenen Abtastwerten ortsaufgelöst ein jeweiliger Referenzabstandswert bestimmt wird,
**dadurch gekennzeichnet,**
**dass** die Referenzteilmessungen für einen Funktionstest über mehrere Abstandsmessungen verteilt werden.

## Claims

1. A camera (10), in particular 3D time-of-flight camera, for acquiring three-dimensional image data from a detection area (18), comprising
an illumination unit (12) for transmitting transmitted light (16) into the detection area (18), the transmitted light being modulated with at least a first modulation frequency,
an image sensor (26) for receiving received light (22) from the detection area (18), the image sensor (26) comprising a plurality of receiving elements (26a) for generating a respective received signal,
a plurality of demodulation units (32) for demodulating the received signals at the first modulation frequency to obtain sample values,
a reference illumination unit (38) for transmitting reference light (42) modulated at the first modulation frequency and guided within the camera (10) onto the image sensor (26),
and a control and evaluation unit (34) configured, for a distance measurement, to control the illumination unit (12) and/or the demodulation units (32) for a first number of partial measurements with a respective different phase offset between the first modulation frequency for the transmitted light (16) and the first modulation frequency for the demodulation, and to determine a distance value from the sample values obtained by the partial measurements per receiving element (26a),
and, for a function test, to control the reference illumination unit (12) and/or the demodulation units (32) for a second number of reference partial measurements with a respective different phase offset between the first modulation frequency for the reference light (42) and the first modulation frequency for the demodulation, and to determine a reference distance value from the sample values obtained by the reference partial measurements per receiving element (26a), **characterized in that** the control and evaluation unit (34) is further configured to distribute the reference partial measurements for a function test over a plurality of distance measurements.

2. The camera (10) according to claim 1,
wherein the control and evaluation unit (34) is configured to activate only the illumination unit during a partial measurement and to activate only the reference illumination unit during a reference partial measurement.

3. The camera (10) according to claim 1 or 2,
wherein the first number and/or the second number is at least three.

4. The camera (10) according to any of the preceding claims,
wherein the first number is not equal to the second number.

5. The camera (10) according to any of the preceding claims,
wherein the control and evaluation unit (34) is configured to perform one reference partial measurement or two reference partial measurements per distance measurement and/or to perform at least one reference partial measurement in every i-th distance measurement.

6. The camera (10) according to any of the preceding claims,
wherein the control and evaluation unit (34) is configured to vary the first number, the second number, the phase offset of the partial measurements, the phase offset of the reference partial measurements and/or the distribution of reference partial measurements to distance measurements.

7. The camera (10) according to any of the preceding claims,
wherein the control and evaluation unit (34) is configured to determine a reference distance value from at least one current reference partial measurement of a current distance measurement and at least one previous reference partial measurement of a previous distance measurement, in particular in this way to determine a reference distance value with each distance measurement.

8. The camera (10) according to any of the preceding claims,
wherein the control and evaluation unit (34) is configured to use a shorter integration time during the reference partial measurements than during the partial measurements.

9. The camera (10) according to any of the preceding claims,
wherein the control and evaluation unit (34) is configured to check at least one function of the image sensor (26) by means of only one reference partial measurement, in particular to find defective pixels.

10. The camera (10) according to any of the preceding claims,
wherein the control and evaluation unit (34) is configured to perform further partial measurements and/or reference partial measurements with at least a second modulation frequency.

11. The camera (10) according to any of the preceding claims,
wherein the control and evaluation unit (34) is configured to apply an artificial delay to the reference light.

12. The camera (10) according to any of the preceding claims,
wherein the receiving elements (26a) comprise a plurality of charge accumulators (30), in particular two charge accumulators (30) that are read out differentially.

13. The camera (10) according to any of the preceding claims,
wherein the reference light (42) is guided to the image sensor (26) directly, via at least one reflective region (44) and/or a light guide.

14. The camera (10) according to any of the preceding claims,
wherein the control and evaluation unit (34) is configured to change a frame rate at which distance measurements are repeated and/or to adjust the transmitted light (16) of the illumination unit (12).

15. A method for acquiring three-dimensional image data from a detection area (18),
wherein transmitted light (16) is transmitted into the detection area (18), the transmitted light being modulated with at least a first modulation frequency, received light (22) is received from the detection area (18) and a plurality of received signals are generated therefrom in a spatially resolved manner (26a), the received signals are demodulated with the first modulation frequency in order to obtain sample values,
for a distance measurement, a first number of partial measurements are carried out with a respective different phase offset between the first modulation frequency for the transmitted light (16) and the first modulation frequency for the demodulation, and a respective distance value is determined in a spatially resolved manner from the sample values obtained by the partial measurements, reference light (42) is transmitted that is modulated with the first modulation frequency and is received again without a light path through the detection area (18), and,
for a function test, a second number of reference partial measurements are carried out with a respective different phase offset between the first modulation frequency for the reference light (42) and the first modulation frequency for the demodulation, and a respective reference distance value is determined in a spatially resolved manner from the sample values obtained by the reference partial measurements,
**characterized in that** the reference partial measurements for a function test are distributed over a plurality of distance measurements.

## Revendications

1. Caméra (10), en particulier caméra 3D à temps de vol, pour acquérir des données d'image tridimensionnelles à partir d'une zone de détection (18), comprenant
une unité d'éclairage (12) pour transmettre la lumière transmise (16) dans la zone de détection (18), la lumière transmise étant modulée avec au moins une première fréquence de modulation,
un capteur d'image (26) pour recevoir la lumière reçue (22) de la zone de détection (18), le capteur d'image (26) comprenant une pluralité d'éléments de réception (26a) pour générer un signal reçu respectif,
une pluralité d'unités de démodulation (32) pour démoduler les signaux reçus à la première fréquence de modulation afin d'obtenir des valeurs échantillons, une unité d'éclairage de référence (38) pour la transmission de lumière de référence (42) modulée à la première fréquence de modulation et guidée à l'intérieur de la caméra (10) sur le capteur d'images (26),
et une unité de commande et d'évaluation (34) configurée, pour une mesure de distance, pour commander l'unité d'éclairage (12) et/ou les unités de démodulation (32) pour un premier nombre de mesures partielles avec un décalage de phase respectif différent entre la première fréquence de modulation pour la lumière émise (16) et la première fréquence de modulation pour la démodulation, et pour déterminer une valeur de distance à partir des valeurs d'échantillon obtenues par les mesures partielles par élément de réception (26a),
et, pour un test de fonctionnement, de commander l'unité d'éclairage de référence (12) et/ou les unités de démodulation (32) pour un deuxième nombre de mesures partielles de référence avec un décalage de phase différent entre la première fréquence de modulation pour la lumière de référence (42) et la première fréquence de modulation pour la démodulation, et de déterminer une valeur de distance de référence à partir des valeurs d'échantillon obtenues par les mesures partielles de référence par élément de réception (26a),
**caractérisé en ce que** l'unité de commande et d'évaluation (34) est en outre configurée pour répartir les mesures partielles de référence pour un test de fonction sur une pluralité de mesures de distance.

2. Caméra (10) selon la revendication 1,
dans laquelle l'unité de commande et d'évaluation (34) est configurée pour activer uniquement l'unité d'éclairage pendant une mesure partielle et pour activer uniquement l'unité d'éclairage de référence pendant une mesure partielle de référence.

3. Caméra (10) selon la revendication 1 ou 2,
dans laquelle le premier nombre et/ou le second nombre est au moins égal à trois.

4. Caméra (10) selon l'une des revendications précédentes,
dans laquelle le premier nombre n'est pas égal au second nombre.

5. Caméra (10) selon l'une des revendications précédentes,
dans laquelle l'unité de commande et d'évaluation (34) est configurée pour effectuer une mesure partielle de référence ou deux mesures partielles de référence par mesure de distance et/ou pour effectuer au moins une mesure partielle de référence dans chaque i-ème mesure de distance.

6. Caméra (10) selon l'une des revendications précédentes,
dans laquelle l'unité de commande et d'évaluation (34) est configurée pour varier le premier nombre, le deuxième nombre, le déphasage des mesures partielles, le déphasage des mesures partielles de référence et/ou la répartition des mesures partielles de référence sur les mesures de distance.

7. Caméra (10) selon l'une des revendications précédentes,
dans laquelle l'unité de commande et d'évaluation (34) est configurée pour déterminer une valeur de distance de référence à partir d'au moins une mesure partielle de référence actuelle d'une mesure de distance actuelle et d'au moins une mesure partielle de référence précédente d'une mesure de distance précédente, notamment de cette manière pour déterminer une valeur de distance de référence à chaque mesure de distance.

8. Caméra (10) selon l'une des revendications précédentes,
dans laquelle l'unité de commande et d'évaluation (34) est configurée pour utiliser un temps d'intégration plus court pendant les mesures partielles de référence que pendant les mesures partielles.

9. Caméra (10) selon l'une des revendications précédentes,
dans laquelle l'unité de commande et d'évaluation (34) est configurée pour vérifier au moins une fonction du capteur d'image (26) au moyen d'une seule mesure partielle de référence, notamment pour trouver des pixels défectueux.

10. Caméra (10) selon l'une des revendications précédentes,
dans laquelle l'unité de commande et d'évaluation (34) est configurée pour effectuer d'autres mesures partielles et/ou des mesures partielles de référence avec au moins une deuxième fréquence de modulation.

11. Caméra (10) selon l'une des revendications précédentes,
dans laquelle l'unité de commande et d'évaluation (34) est configurée pour appliquer un retard artificiel à la lumière de référence.

12. Caméra (10) selon l'une des revendications précédentes,
dans laquelle les éléments de réception (26a) comprennent une pluralité d'accumulateurs de charge (30), en particulier deux accumulateurs de charge (30) qui sont lus de manière différentielle.

13. Caméra (10) selon l'une des revendications précédentes,
dans laquelle la lumière de référence (42) est guidée vers le capteur d'image (26) directement, par l'intermédiaire d'au moins une zone de réflexion (44) et/ou d'un conduit de lumière.

14. Caméra (10) selon l'une des revendications précédentes,
dans laquelle l'unité de commande et d'évaluation (34) est configurée pour modifier une fréquence d'images à laquelle les mesures de distance sont répétées et/ou pour adapter la lumière transmise (16) de l'unité d'éclairage (12).

15. Procédé d'acquisition de données d'image tridimensionnelles à partir d'une zone de détection (18),
dans lequel une lumière émise (16) est transmise dans la zone de détection (18), la lumière émise étant modulée avec au moins une première fréquence de modulation,
la lumière reçue (22) est reçue de la zone de détection (18) et une pluralité de signaux reçus sont générés à partir de celle-ci d'une manière résolue spatialement (26a),
les signaux reçus sont démodulés avec la première fréquence de modulation afin d'obtenir des valeurs échantillons,
pour une mesure de distance, un premier nombre de mesures partielles sont effectuées avec un décalage de phase différent entre la première fréquence de modulation pour la lumière émise (16) et la première fréquence de modulation pour la démodulation, et une valeur de distance respective est déterminée de manière résolue spacialement à partir des valeurs d'échantillon obtenues par les mesures partielles,
une lumière de référence (42) qui est modulée avec la première fréquence de modulation est émise et est reçue à nouveau sans trajet lumineux à travers la zone de détection (18), et,
pour un test de fonctionnement, un deuxième nombre de mesures partielles de référence est effectué avec un décalage de phase différent entre la première fréquence de modulation pour la lumière de référence (42) et la première fréquence de modulation pour la démodulation, et une valeur de distance de référence respective est déterminée de manière résolue spacialement à partir des valeurs d'échantillons obtenues par les mesures partielles de référence, **caractérisé en ce que** les mesures partielles de référence pour un test de fonctionnement sont réparties sur une pluralité de mesures de distance.
